# EUROPÄISCHE PATENTSCHRIFT

(11) **EP 2 457 795 B1**
(45) Veröffentlichungstag und Bekanntmachung des Hinweises auf die Patenterteilung: **28.08.2013**
(21) Anmeldenummer: 10015090.3
(22) Anmeldetag: 29.11.2010
(51) Int. Cl.: B61C 9/44, F16D 3/18, F16D 3/62

(54) **Kupplungsvorrichtung**
Coupling device
Dispositif d'embrayage

(43) Veröffentlichungstag der Anmeldung: 30.05.2012
(73) Patentinhaber: Siemens Aktiengesellschaft, 80333 München (DE)
(72) Erfinder: Jansen, Andre, 46325 Borken (DE); Peters, Robert, 46399 Bocholt (DE)

(56) Entgegenhaltungen:
- DE-A1- 10 050 757
- DE-A1- 10 257 018
- DE-U1-202005 015 769
- FR-A- 1 196 352
- JP-A- 2007 314 133

## Beschreibung

Die Erfindung betrifft eine Kupplungsvorrichtung zur Verbindung eines antreibenden und eines angetriebenen Maschinenteils. Derartige Maschinenteile sind beispielsweise Wellen, Radnaben oder Flansche. Die Kupplungsvorrichtung umfaßt ein antriebsseitiges und ein abtriebsseitiges Kupplungselement, die durch eine Zwischenwelle miteinander verbunden sind. Derartige Kupplungsvorrichtungen sind recht drehsteif und ermöglichen zugleich einen Ausgleich von radialem sowie axialem Versatz zwischen zwei zu verbindenden rotierenden Maschinenteilen.

Aus DE 102 57 018 A1 ist eine Kupplung zur Verbindung eines antreibenden und eines angetriebenen Maschinenteils bekannt, die an Enden einer Zwischenwelle angeordnete Gelenkhebelkupplungen umfaßt, die jeweils mindestens drei gleiche Gelenkhebel aufweisen. Die Gelenkhebel liegen über an ihren Enden angeordnete elastische Gelenke einerseits an der Zwischenwelle und andererseits an den zu verbindenden Maschinenteilen an. Die elastischen Gelenke weisen Achsen auf, die jeweils senkrecht auf eine Achse der Zwischenwelle bzw. auf Achsen der zu verbindenden Maschinenteile oder auf eine durch die Achse der Zwischenwelle bzw. den Achsen der zu verbindenden Maschinenteile gelegte und zu den Gelenkhebeln parallel verlaufende Axialebene ausgerichtet sind.

In DE 100 50 757 A1 ist eine Antriebseinheit für Schienenfahrzeuge beschrieben, die einen an einem Fahrzeugrahmen oder Fahrwerk aufgehängten Elektromotor, ein Getriebe und ein kardanisch wirkenden Kupplungssystem umfaßt. Das Kupplungssystem ist zwischen einer Radsatzwelle und dem Getriebe angeordnet.

Dabei ist ein erster Teil des Kupplungssystems in Form einer Bogenzahnkupplung in ein Abtriebszahnrad des Getriebes sowie in dessen Schmierölkreislauf integriert. Zwischen Getriebe und Radsatz ist ein abtriebsseitiger zweiter Teil des Kupplungssystems vorgesehen. Dabei ist der zweite Teil des Kupplungssystems beispielsweise eine gummielastische Kupplung.

Die DE 20 2005 015 769 U1 betrifft eine kardanische Doppelgelenkkupplung für Schienenfahrzeuge mit zwei Gelenkebenen. Die Kupplung enthält zwei Kuppiungsgeienke, die zur Drehmomentübertragung durch eine Hohlwelle über eine Zwischenwelle miteinander verbunden sind, wobei die eine Gelenkebene einem Zahnkupplungsgelenk mit Balligverzahnung mit winkligem und axialem Ausgleichsvermögen und die andere Gelenkebene einem zweiten Kupplungsgelenk zugeordnet sind. Das zweite Kupplungsgelenk der anderen Gelenkebene ist als ein drehsteifes, biegeelastisches Kupplungsgelenk ausgebildet.

Konventionelle Kupplungsvorrichtungen mit einem antriebsseitigen und einem abtriebsseitiges Kupplungselement umfassen keine unterschiedlichen Kupplungstypen, da ansonsten ungleiche Rückstellkräfte in Kupplungselementen entstehen, die nur schwer kompensiert werden können. Außerdem weisen Anschlußabschnitte an den Kupplungselementen bei konventionellen Kupplungsvorrichtungen keine durch unterschiedliche Kupplungstypen bedingten uneinheitlichen Durchmesser auf, die bisher als grundsätzlich unerwünscht erachtet werden.

Der vorliegenden Erfindung liegt die Aufgabe zugrunde, eine Kupplungsvorrichtung zu schaffen, die eine hohe Drehsteifigkeit aufweist, einen Ausgleich von radialem und axialem Versatz zwischen zwei zu verbindenden rotierenden Maschinenteilen ermöglicht und einen elektrischen Stromfluß unterbinden kann.

Diese Aufgabe wird erfindungsgemäß durch eine Kupplungsvorrichtung mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Kupplungsvorrichtung zur Verbindung eines antreibenden Maschinenteils mit einem angetriebenen Maschinenteil umfaßt eine an einem ersten antriebs- oder abtriebsseitigen Endabschnitt der Kupplungsvorrichtung angeordnete gummielastische Kupplung. An einem zweiten abtriebs-oder antriebsseitigen Endabschnitt der Kupplungsvorrichtung ist eine Zahnkupplung angeordnet. Außerdem ist eine die gummielastische Kupplung mit der Zahnkupplung verbindende Zwischenwelle vorgesehen. Darüber hinaus weisen die Zahnkupplung und die gummielastische Kupplung derart aufeinander abgestimmte Rückstellkräfte auf, daß die Kupplungsvorrichtung bei einer radialen Verlagerung sowohl einen zentrischen Lauf als auch einen Axialversatzausgleich aufweist. Die Zwischenwelle ist dabei zweistückig ausgebildet mit einem ersten Wellenabschnitt und einem zweiten Wellenabschnitt, wobei die beiden Wellenabschnitte der Zwischenwelle lösbar miteinander fest verbunden sind. Die Zwischenwelle weist einen axial durchgehenden Hohlraum auf. Damit ermöglicht die erfindungsgemäße Kupplungsvorrichtung einen wirksamen Ausgleich von radialem und axialem Versatz zwischen zwei zu verbindenden rotierenden Maschinenteilen und eine Unterbindung eines beispielsweise von elektrischen Maschinen verursachten Stromflusses über einen die Kupplungsvorrichtung umfassenden Antriebsstrang.

Die Rückstellkräfte können auch derart aufeinander abgestimmt sein, daß die Kupplungsvorrichtung bei Normalbetrieb immer zentrisch läuft und bei einem vorgegebenen Anfahrmoment einen Axialversatz ausgleichen kann. Vorzugsweise sind die gummielastische Kupplung und die Zahnkupplung derart aufeinander abgestimmt, daß resultierende radiale und axiale Rückstellkräfte minimiert sind.

Die gummielastische Kupplung kann beispielsweise eine Gelenkhebelkupplung, eine Laschenkupplung, eine Keilpaketkupplung, eine Stahllamellenkupplung mit gummielastischem Zwischenstück, eine Bolzenkupplung oder eine Klauenkupplung umfassen. Derartige Kupplungen weisen gute elektrisch isolierende Eigenschaften und eine hohe Drehsteifigkeit auf.

Entsprechend einer vorteilhaften Ausgestaltung der vorliegenden Erfindung weist die Zahnkupplung eine Bogenverzahnung auf. Damit kann auch ein Winkelversatz zwischen zwei zu verbindenden rotierenden Maschinenteilen ausgeglichen werden.

Bei einer bevorzugten Weiterbildung der vorliegenden Erfindung ist die Zahnkupplung in eine Getriebehohlwelle integriert. Alternativ dazu kann die Zahnkupplung vor die Getriebehohlwelle montiert sein. Wenn die Zahnkupplung entsprechend einer weiteren Ausgestaltung der vorliegenden Erfindung ein inneres und ein äußeres Kupplungselement umfaßt, kann das äußere Kupplungselement eine Verlängerung der Getriebehohlwelle bilden. Vorzugsweise ist in das äußere Kupplungselement ein Lagersitz für die Getriebehohlwelle integriert. Darüber hinaus kann die Zahnkupplung eine Abdichtung eines Getriebes bilden. Mit derartigen Weiterbildungen ist eine äußerst kompakte Triebstranggestaltung möglich.

Entsprechend einer vorteilhaften Weiterbildung der vorliegenden Erfindung umfaßt die Zahnkupplung ein inneres und ein äußeres Kupplungselement, und zwischen dem äußeren Kupplungselement und der Zwischenwelle ist ein stoßdämpfender Anlaufring angeordnet. Der Anlaufring bildet einen Sitz für einen die Zwischenwelle umgebenden Dichtring und ein Begrenzungselement für axiale Relativbewegungen zwischen Zahnkupplung und Zwischenwelle. Damit können axiale Bewegungen wirksam bedämpft und begrenzt werden.

Die Erfindung wird nachfolgend an einem Ausführungsbeispiel anhand der Zeichnung näher erläutert. Es zeigt
- Figur 1: eine Kupplungsvorrichtung mit einer Zahnkupplung und einer Gelenkhebelkupplung in einer Schnittdarstellung,
- Figur 2: die Gelenkhebelkupplung der in Figur 1 dargestellten Kupplungsvorrichtung in einer Seitenansicht,
- Figur 3: die Kupplungsvorrichtung gemäß Figur in perspektivischer Darstellung.

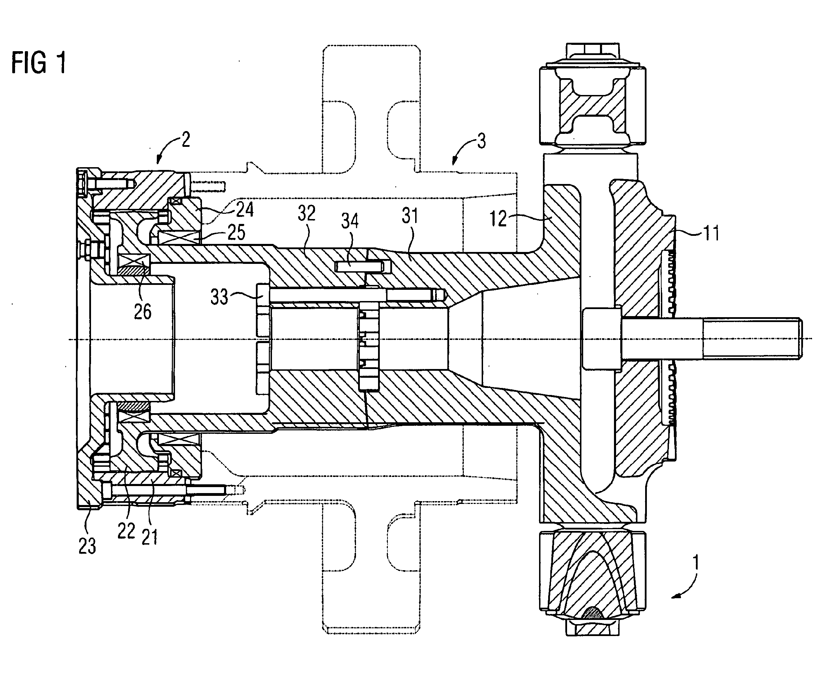

Die in Figur 1 dargestellte Kupplungsvorrichtung zur Verbindung eines antreibenden Maschinenteils mit einem angetriebenen Maschinenteil umfaßt eine an einem ersten antriebs- oder abtriebsseitigen Endabschnitt der Kupplungsvorrichtung angeordnete gummielastische Kupplung 1, die im vorliegenden Ausführungsbeispiel als Gelenkhebelkupplung ausgestaltet ist. Grundsätzlich könnte die gummielastische Kupplung 1 auch als Laschenkupplung, Keilpaketkupplung, Stahllamellenkupplung mit gummielastischem Zwischenstück, Bolzenkupplung oder Klauenkupplung ausgestaltet sein.

Die Gelenkhebelkupplung 1 umfaßt einen ersten 11 und einen zweiten Anschlußflansch 12, die über 4 Lenkerelemente 13 miteinander verbunden sind. Der erste Anschlußflansch 11 der Gelenkhebelkupplung 1 ist im wesentlichen konzentrisch innerhalb des zweiten Anschlußflanschs 12 angeordnet, dessen armartige Fortsätze, an welche die Lagerzapfen angeformt sind, den ersten Anschlußflansch 11 im vorliegenden Ausführungsbeispiel radial zumindest partiell umgreifen.

An einem zweiten abtriebs- oder antriebsseitigen Endabschnitt der Kupplungsvorrichtung ist eine Zahnkupplung 2 angeordnet, die ein inneres 22 und ein äußeres Kupplungselement 21 umfaßt. Das äußere Kupplungselement 21 bildet im vorliegenden Ausführungsbeispiel eine Verlängerung einer in den Figuren nicht näher dargestellten Getriebehohlwelle. Dabei kann die Zahnkupplung in die Getriebehohlwelle integriert oder vor diese montiert sein. Außerdem ist in das äußere Kupplungselement 21 ein Lagersitz für die Getriebehohlwelle integriert.

Im vorliegenden Ausführungsbeispiel weist die Zahnkupplung 2 eine Bogenverzahnung auf und kann damit auch einen Winkelversatz zwischen einer Antriebswelle und einer Abtriebswelle ausgleichen. Des weiteren kann die Zahnkupplung 2 öl- oder fettgeschmiert sein.

An einer getriebeseitigen Stirnseite der Zahnkupplung 2 ist ein Deckel 23 an das äußere Kupplungselement 21 geschraubt, so daß die Zahnkupplung 2 eine Abdichtung eines Getriebes bildet. Zwischen dem äußeren Kupplungselement 21 und einer Zwischenwelle 3, welche die Gelenkhebelkupplung 1 mit der Zahnkupplung 2 verbindet, ist ein stoßdämpfender Anlaufring 24 angeordnet, der einen Sitz für einen die Zwischenwelle 3 umgebenden Dichtring 25 und ein Begrenzungselement für axiale Relativbewegungen zwischen Zahnkupplung 2 und Zwischenwelle 3 bildet. Zusätzlich zum Dichtring 25 zwischen der Zwischenwelle 3 und dem Anlaufring 24 ist ein Dichtring 26 radial zwischen einem hohlwellenartigen Fortsatz des Deckels 23 und dem inneren Kupplungselement 22 angeordnet. Das innere Kupplungselement 22 ist im vorliegenden Ausführungsbeispiel einstückig an die Zwischenwelle 3 angeformt und bildet einen Sitz für den mit dem Deckel 23 verbundenen Dichtring 26.

Die Zwischenwelle 3 ist zweistückig ausgestaltet. Ein erster Wellenabschnitt 31 der Zwischenwelle 3 ist mit dem zweiten Anschlußflansch 12 der Gelenkhebelkupplung 1 verbunden, während das innere Kupplungselement 22 der Zahnkupplung 2 an einen zweiten im wesentlichen hohlwellenartigen Wellenabschnitt 32 der Zwischenwelle 3 angeformt ist. Die beiden Wellenabschnitte 31, 32 der Zwischenwelle 3 werden zunächst mittels Verbindungsstiften 34, die in Bohrungen an den Wellenabschnitten 31, 32 gesteckt sind, aufeinander zentriert und anschließend mittels Schrauben 33 fest verbunden. Für Wartungs-oder Instandhaltungsar-beiten an der vorliegenden Kupplungsvorrichtung können die Schrauben 33 wieder gelöst werden.

Die Zahnkupplung 2 und die Gelenkhebelkupplung 1 weisen derart aufeinander abgestimmte Rückstellkräfte auf, daß die Kupplungsvorrichtung bei einer radialen Verlagerung sowohl einen zentrischen Lauf als auch einen Axialversatzausgleich aufweist. Aufgrund elektrisch isolierender Werkstoffe an oder in mit den Anschlußflanschen 11, 12 der Gelenkhebelkupplung 1 verbundenen Lenkerelementen 13 kann ein Stromfluß durch ein mit der Kupplungsvorrichtung verbundenes Getriebe vermieden werden.

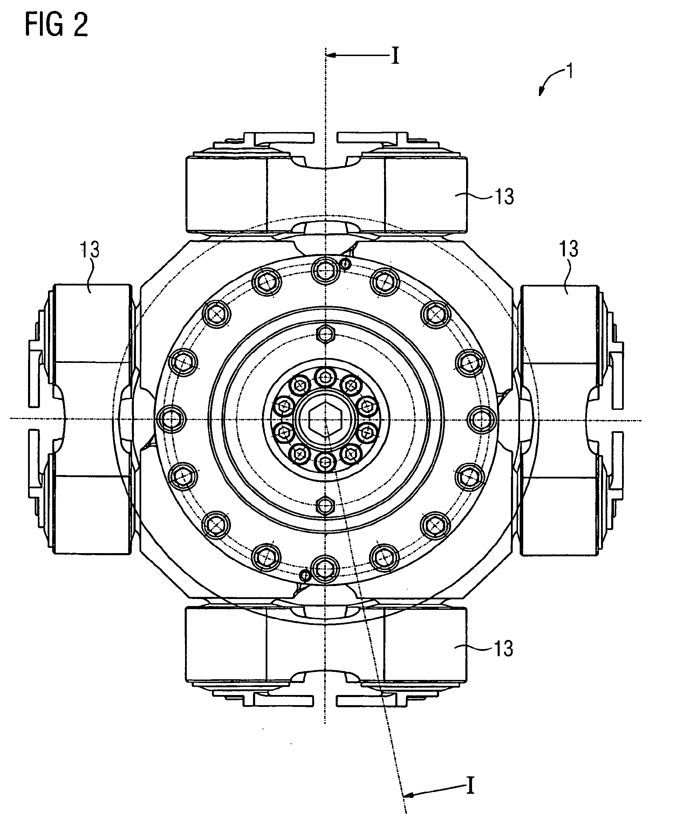

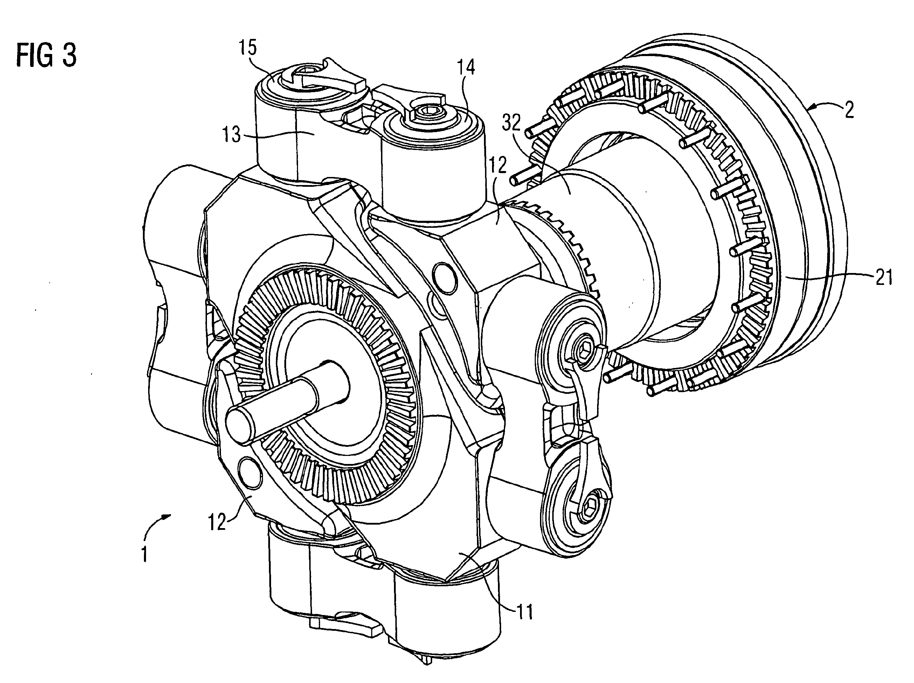

Anhand der Figuren 2 und 3 ist zu erkennen, daß die Gelenkhebelkupplung 1 neben den Anschlußflanschen 11, 12 mit Lagerzapfen der Anschlußflansche 11, 12 verbundene Lenkerelemente 13 umfaßt. Zwischen den an die Anschlußflansche 11, 12 angeformten Lagerzapfen und den diese umgebenden Bohrungen der Lenkerelemente 13 sind gummielastische, elektrisch isolierende Buchsen 14 angeordnet, die mittels jeweils eines Sicherungsstücks 15 an die Lagerzapfen montiert sind.

Die Anwendung der vorliegenden Erfindung ist nicht auf das beschriebene Ausführungsbeispiel beschränkt.

## Patentansprüche

1. Kupplungsvorrichtung zur Verbindung eines antreibenden Maschinenteils mit einem angetriebenen Maschinenteil mit
- einer an einem ersten antriebs- oder abtriebsseitigen Endabschnitt der Kupplungsvorrichtung angeordneten elastischen Kupplung (1),
- einer an einem zweiten abtriebs- oder antriebsseitigen Endabschnitt der Kupplungsvorrichtung angeordneten Zahnkupplung (2),
- einer die elastische Kupplung (1) mit der Zahnkupplung (2) verbindenden Zwischenwelle (3), wobei die Zahnkupplung (2) und die elastische Kupplung (1) derart aufeinander abgestimmte Rückstellkräfte aufweisen, daß die Kupplungsvorrichtung bei einer radialen Verlagerung sowohl einen zentrischen Lauf als auch einen Axialversatzausgleich aufweist,
**dadurch gekennzeichnet,**
**dass** die elastische Kupplung (1) gummielastisch ist,
**dass** die Zwischenwelle (3) zweistückig ausgebildet ist, mit einem ersten Wellenabschnitt (31) und einem zweiten Wellenabschnitt (32), wobei die beiden Wellenabschnitte (31, 32) der Zwischenwelle (3) lösbar miteinander fest verbunden sind, und dass die Zwischenwelle (3) einen axial durchgehenden Hohlraum aufweist.

2. Kupplungsvorrichtung nach Anspruch 1,
bei dem die gummielastische Kupplung (1) eine Gelenkhebelkupplung, eine Laschenkupplung, eine Keilpaketkupplung, eine Stahllamellenkupplung mit gummielastischem Zwischenstück, eine Bolzenkupplung oder eine Klauenkupplung umfaßt.

3. Kupplungsvorrichtung nach einem der Ansprüche 1 oder 2,
bei dem die Zahnkupplung (2) eine Bogenverzahnung aufweist.

4. Kupplungsvorrichtung nach einem der Ansprüche 1 bis 3,
bei dem die Zahnkupplung (2) in eine Getriebehohlwelle integriert ist.

5. Kupplungsvorrichtung nach einem der Ansprüche 1 bis 3,
bei dem die Zahnkupplung (2) vor einer Getriebehohlwelle montiert ist.

6. Kupplungsvorrichtung nach einem der Ansprüche 4 oder 5,
bei dem die Zahnkupplung (2) ein inneres (22) und ein äußeres (21) Kupplungselement umfaßt, bei dem das äußere Kupplungselement (21) eine Verlängerung der Getriebehohlwelle bildet.

7. Kupplungsvorrichtung nach Anspruch 6,
bei dem in das äußere Kupplungselement (21) ein Lagersitz für die Getriebehohlwelle integriert ist.

8. Kupplungsvorrichtung nach einem der Ansprüche 4 bis 7,
bei dem die Zahnkupplung (2) eine Abdichtung eines Getriebes bildet.

9. Kupplungsvorrichtung nach einem der Ansprüche 1 bis 8,
bei dem die Zahnkupplung (2) ein inneres (22) und ein äußeres (21) Kupplungselement umfaßt, bei dem zwischen dem äußeren Kupplungselement (21) und der Zwischenwelle (3) ein stoßdämpfender Anlaufring (24) angeordnet ist, der einen Sitz für einen die Zwischenwelle (3) umgebenden Dichtring (25) und ein Begrenzungselement für axiale Relativbewegungen zwischen Zahnkupplung (2) und Zwischenwelle (3) bildet.

## Claims

1. Clutch device for connecting a driving machine part to a driven machine part with
- an elastic clutch (1) which is arranged on a first drive-side or output-side end section of the clutch device,
- a tooth clutch (2) which is arranged on a second output-side or drive-side end section of the clutch device,
- an intermediate shaft (3) which connects the elastic clutch (1) to the tooth clutch (2), the tooth clutch (2) and the elastic clutch (1) having restoring forces which are adapted to one another in such a way that, in the case of a radial displacement, the clutch device has both central running and axial offset compensation **characterized in that** the elastic clutch (1) is elastomeric, **in that** the intermediate shaft (3) is of two-part configuration, having a first shaft section (31) and a second shaft section (32), the two shaft sections (31, 32) of the intermediate shaft (3) being connected firmly to one another in a releasable manner, and **in that** the intermediate shaft (3) has an axially continuous cavity.

2. Clutch device according to Claim 1, in which the elastomeric clutch (1) comprises a hinged lever clutch, a strap clutch, a spline assembly clutch, a steel disk clutch with an elastomeric intermediate piece, a bolt clutch or a claw clutch.

3. Clutch device according to either of Claims 1 and 2, in which the tooth clutch (2) has a spiral toothing system.

4. Clutch device according to one of Claims 1 to 3, in which the tooth clutch (2) is integrated into a transmission hollow shaft.

5. Clutch device according to one of Claims 1 to 3, in which the tooth clutch (2) is mounted in front of a transmission hollow shaft.

6. Clutch device according to either of Claims 4 and 5, in which the tooth clutch (2) comprises an inner (22) and an outer (21) clutch element, in which the outer clutch element (21) forms an extension of the transmission hollow shaft.

7. Clutch device according to Claim 6, in which a bearing seat for the transmission hollow shaft is integrated into the outer clutch element (21).

8. Clutch device according to one of Claims 4 to 7, in which the tooth clutch (2) forms a sealing means of a transmission.

9. Clutch device according to one of Claims 1 to 8, in which the tooth clutch (2) comprises an inner (22) and an outer (21) clutch element, in which a shock absorbing thrust ring (24) is arranged between the outer clutch element (21) and the intermediate shaft (3), which thrust ring (24) forms a seat for a sealing ring (25) which surrounds the intermediate shaft (3) and a limiting element for axial relative movements between the tooth clutch (2) and the intermediate shaft (3).

## Revendications

1. Dispositif d'embrayage pour la liaison d'une partie de machine menante à une partie de machine menée, comprenant
- un accouplement ( 1 ) élastique disposé à un premier tronçon d'extrémité du côté menant ou du côté sortie du dispositif d'embrayage,
- un accouplement ( 2 ) à dents disposé à un deuxième tronçon d'extrémité du côté sortie ou du côté menant du dispositif d'embrayage,
- un arbre ( 3 ) intermédiaire reliant l'accouplement ( 1 ) élastique à l'accouplement ( 2 ) à dents, l'accouplement ( 2 ) à dents et l'accouplement ( 1 ) élastique ayant des forces de rappel adaptées l'un à l'autre, de manière à ce que le dispositif d'embrayage ait, lors d'un déplacement radial, à la fois une course de centrage et une compensation du décalage axial,
**caractérisé**
**en ce que** l'accouplement ( 1 ) élastique a une élasticité de caoutchouc,
**en ce que** l'arbre ( 3 ) intermédiaire est en deux pièces, comprenant un premier tronçon ( 31 ) d'arbre et un deuxième tronçon ( 32 ) d'arbre, les deux tronçons ( 31, 32 ) de l'arbre ( 3 ) intermédiaire étant reliés solidement l'un à l'autre de manière amovible, et en ce que l'arbre ( 3 ) intermédiaire a une cavité traversante axialement.

2. Dispositif d'embrayage suivant la revendication 1,
dans lequel l'accouplement ( 1 ) ayant une élasticité de caoutchouc comprend un accouplement à levier articulé, un accouplement à plaquette, un accouplement à clavette, un accouplement à lamelle d'acier ayant une pièce intermédiaire ayant une élasticité de caoutchouc, un accouplement à broche ou un accouplement à crabot.

3. Dispositif d'embrayage suivant l'une des revendications 1 ou 2,
dans lequel l'accouplement ( 2 ) à dents a une denture hypoïde.

4. Dispositif d'embrayage suivant l'une des revendications 1 à 3,
dans lequel l'accouplement ( 2 ) à dents est intégré dans un arbre creux de transmission.

5. Dispositif d'embrayage suivant l'une des revendications 1 à 3,
dans lequel l'accouplement ( 2 ) à dents est monté avant un arbre creux de transmission.

6. Dispositif d'embrayage suivant l'une des revendications 4 ou 5,
dans lequel l'accouplement ( 2 ) à dents comprend un élément ( 22 ) intérieur et un élément ( 21 ) extérieur d'accouplement, dans lequel l'élément ( 21 ) extérieur d'accouplement forme un prolongement de l'arbre creux de transmission.

7. Dispositif d'embrayage suivant la revendication 6,
dans lequel un siège de palier pour l'arbre creux de transmission est intégré dans l'élément ( 21 ) extérieur d'accouplement.

8. Dispositif d'embrayage suivant l'une des revendications 4 à 7,
dans lequel l'accouplement ( 2 ) à dents forme une étanchéité d'une transmission.

9. Dispositif d'embrayage suivant l'une des revendications 1 à 8,
dans lequel l'accouplement ( 2 ) à dents comprend un élément ( 22 ) intérieur et un élément ( 21 ) extérieur d'accouplement, dans lequel il est monté entre l'élément ( 21 ) extérieur et l'arbre ( 3 ) intermédiaire un anneau ( 24 ) d'usure, qui amortit les chocs et qui forme un siège pour un joint ( 25 ) d'étanchéité entourant l'arbre ( 3 ) intermédiaire, et un élément de limitation des mouvements axiaux relatifs entre l'accouplement ( 2 ) à dents et l'arbre ( 3 ) intermédiaire.
